# EUROPEAN PATENT APPLICATION

(11) **EP 2 198 965 A1**
(43) Date of publication of application: **23.06.2010**
(21) Application number: 08172250.6
(22) Date of filing: 19.12.2008
(51) Int. Cl.: B01L 3/00, B01L 7/00, G01N 21/64, C12Q 1/68

(54) **Integrated device for automated simultaneous detection of multiple specific targets using nucleic acid amplification**

(71) Applicant: Koninklijke Philips Electronics N.V., 5621 BA Eindhoven (NL); Philips Intellectual Property & Standards GmbH, 20099 Hamburg (DE)
(72) Inventor: The designation of the inventor has not yet been filed
(74) Representative: Damen, Daniel Martijn

(57) **Abstract**

The invention comprises an integrated and simple system to perform automated simultaneous and specific detection of multiple analytes by the use of polymerase chain reaction. The system integrates the functionalities of cell lysis and extraction of DNA, dilution of the lysate, multiplexed polymerase chain reactions, detection of the amplified DNA by a flow-over array by use of confocal scanning technology or evanescent wave excitation and image capture.

## Description

### FIELD OF THE INVENTION

The invention relates to an integrated device for automated simultaneous detection of multiple specific targets using nucleic acid amplification.

### BACKGROUND OF THE INVENTION

Since the initial invention of the PCR process in the year 1983 by Mullis, amplification using the PCR process has become a mainstream application, widely used in today's biochemical labs. The PCR process is used for the amplification of specific DNA fragments for a variety of applications, such as cloning for sequencing, DNA-based phylogeny, or functional analysis of genes, diagnosis of hereditary diseases, identification of genetic fingerprints and the detection and diagnosis of infectious diseases. In PCR a DNA polymerase is used to amplify a piece of DNA by in vitro enzymatic replication. As the PCR progresses, the DNA thus generated is itself used as a template for replication and the DNA template is exponentially amplified. It is thus possible to amplify a single or few copies of a piece of DNA across several orders of magnitude. Most PCR applications employ a heat-stable DNA polymerase, such as Taq polymerase, an enzyme originally isolated from the bacterium *Thermus aquaticus.* Single-stranded DNA is used as a template and DNA oligonucleotides or DNA primers are used for initiation of DNA synthesis. The vast majority of PCR methods use thermal cycling, i.e., alternately heating and cooling the PCR sample to a defined series of temperature steps in order to physically separate the strands used as template during DNA synthesis by the DNA polymerase to selectively amplify the target DNA.

Although the biochemical basics have been known since 1983, the PCR only was adopted for routine execution after the invention of automatic thermocyclers. Widespread use of PCR applications, however, is limited by the complex steps and the lack of automation for the amplification and the detection of multiple species. This is especially true for the application of PCR in clinical diagnostics, where high work load and lack of training in molecular biology on the one hand, as well as lack of space and infrastructure on the other hand is heavily impeding the widespread application of molecular tests, despite the huge potential of the application of these technologies.

Increasing molecular diagnostic tests in routine clinical practice will become reality through automation of the total assays. Through reduction of human errors, many biochemical assays can yield better performance and robustness when subsequent process steps are integrated in (micro-) fluidic cartridges. Additionally it opens the possibility for new devices that are easier to use and use lower amounts of expensive reactants, such as used in PCR. *In vitro* diagnostic applications may especially benefit from integrated cartridges when speed, sensitivity and minimal contamination risks are required. Integrated molecular systems are known in the art and for example described in Nolan A. Polson, Mark A. Hayes, Analytical Chemistry, 314A-318A (June 1, 2001).

### SUMMARY OF THE INVENTION

The present invention concerns an integrated and simple system to perform automated simultaneous and specific detection of multiple analytes by the use of polymerase chain reaction. The system integrates the functionalities of cell lysis and extraction of DNA, dilution of the lysate, multiplexed polymerase chain reactions, detection of the amplified DNA by a flow-over array by use of confocal scanning technology or evanescent wave excitation and image capture. Thus, by integrating all of the above functionalities in one integrated easy-to-use system, the hands-on-time, i.e. the hours of work needed to perform the analysis is reduced, as well as the probability of cross-contamination and mixing up of samples. Additionally less skilled users are also able to operate the system, compared with conventional analyses which can only be carried out by highly trained staff.

### BRIEF DESCRIPTION OF THE DRAWINGS

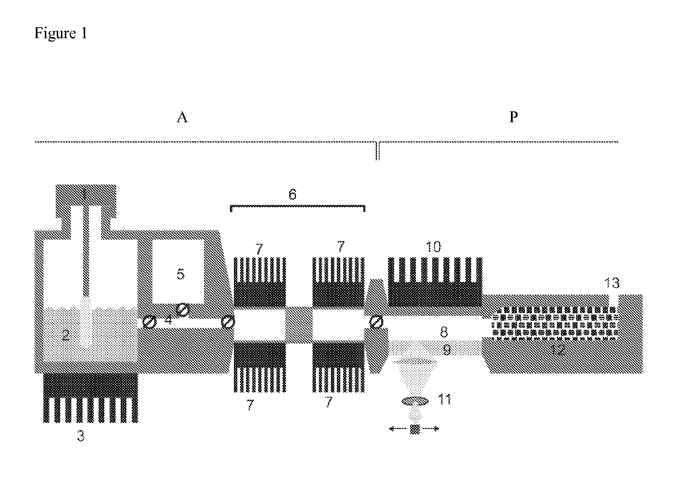

Fig. 1: Simplified schematic of the layout of the device according to the present invention. This schematic should not be understood to restrict the scope of the invention in any possible way, but to represent a schematic for one particular embodiment of the invention. 1 - sampler attached to screw-cap; 2 - lysis chamber with lysis buffer; 3 - heater for lysis chamber; 4 - outlet channel with valves (valves are indicated as strike-through circles); 5 - compartment with diluent to dilute lysate; 6 - rotary PCR assembly; 7 - PCR heaters (set at a fixed temperature); 8 - hybridization array on top of optically transparent surface; 9 - optically transparent surface; 10 - heater for hybridization compartment; 11 - confocal scanning optics; 12 - chamber with filter material for passive fluid actuation; 13 - air vent. A indicates the part of the device wherein pumping is carried out by an active pumping device as described herein; P indicates the part of the device wherein pumping may take place passively by capillary forces (e.g. by the filter material).

### DETAILED DESCRIPTION OF EMBODIMENTS

An embodiment of the present invention is an integrated device for automated simultaneous detection of multiple specific targets using nucleic acid amplification comprising:
- A sample receptacle unit
- A sample lysis unit
- At least one closed PCR reaction chamber repeatedly movable over areas with at least three different temperatures to perform thermocycling or a circuit of at least three closed PCR reaction chambers, wherein each chamber has a different temperature and wherein the fluid comprising the sample is sequentially and repeatedly pumped through said PCR reaction chambers
- A low-density flow-over hybridization array
- A pumping unit for pumping the amplification unit over the low-density flow-over hybridization array
- A detecting unit which is either a scanning confocal fluorescence optical system or an evanescent wave illumination and image detection system.

In a particular embodiment the sample receptacle unit and the sample lysis unit are within the same chamber. In another particular embodiment the lysis of the sample takes place in the sample receptacle unit, which thus is at the same time the sample lysis unit.

In a further embodiment, the integrated device further comprises a nucleic acid extraction unit.

In a further embodiment the low-density flow-over hybridization array comprises immobilized probes.

In a further embodiment the device further comprises a filter having about 10 times the size of the liquid measured at the end of the detection unit. The volume range of the filter is preferably 10-1500 µl. The filter may be placed downstream of the hybridization array and may be used for capillary suction of the amplified material over the hybridization array.

In a further embodiment the at least one PCR chamber is built as a pumping chamber.

In a particular embodiment, the low-density flow-over hybridization array may be planar, for instance in the form of a planar chip or a similar layout.

Another embodiment of the present invention is a method for automated simultaneous detection of multiple specific targets using nucleic acid amplification comprising:
- Providing the sample to a sample receptacle unit
- Generating a crude lysate fluid
- Optionally extracting nucleic acids from the crude lysate fluid
- Dilution of the crude lysate fluid or the extracted nucleic acids
- Active flow pumping of the crude lysate fluid or the diluted nucleic acids into at least one closed PCR reaction chamber repeatedly movable over areas with at least three different temperatures or a circuit of at least three closed PCR reaction chambers, wherein each chamber has a different temperature and wherein the fluid comprising the sample is sequentially and repeatedly pumped through said PCR reaction chambers
- Initial denaturation step at 95°C
- PCR cycling in said PCR reaction chamber(s) to perform thermocycling
- Pushing or pulling the sample out of the PCR chamber into the said low-density flow-over hybridization array
- Detection either by a scanning fluorescence optical system or an evanescent wave illumination and image detection system.

In a further embodiment the fluid is passed at least twice over the low-density flow-over hybridization array.

Another embodiment of the present invention is the use of a device according to the present invention for diagnosis.

In a further embodiment a sexually transmitted disease is diagnosed.

In a further embodiment the device according to the present invention is used for MRSA screening.

In a further embodiment the device according to the present invention is used for VRE screening.

In a further embodiment the device according to the present invention is used detection of toxinogenic *Clostridium difficile.*

In a further embodiment the device according to the present invention is used for detecting group B *streptococcus.*

In a further embodiment the device according to the present invention is used for the detection of nosocomial infections.

The sample receptacle unit is preferably built such that samples may be applied to the device by directly placing a medical swab comprising the sample into the sample receptacle unit. The swab is placed into the sample receptacle unit which preferably is pre equipped with an elution buffer. Pathogens are then eluted from the swab and a crude lysate is generated in the lysis unit.

In one particular embodiment the swab to be placed into the sample receptacle unit is integrated into the removable and reattachable cover which serves to allow access to the sample receptacle unit from the outside. For instance said cover may be in the form of a screw cap into which said swab is integrated (see also Figure 1).

Lysis is preferably performed by one method selected from boiling, alkaline lysis, bead milling, ultrasound, enzymatic lysis (for instance with Proteinase K), FTA^{®} technology (by Whatman) or a combination of the aforementioned methods, all of which are well known to the skilled person.

Preferably substances inhibiting the PCR are reduced by diluting the crude lysate prior to PCR, or alternatively extracting the nucleic acids comprised in the crude lysate.

At least a part, e.g. 10-25 µl of the diluted or undiluted lysate is then pumped into the PCR reaction chamber. This may for instance be achieved by the use of a flexible foil comprised by the PCR chamber.

In the PCR chamber, appropriate labeled multiplex primers are preferably pre-deposited together with PCR buffer mastermix. This may for instance be implemented by drying; preferably by lyophilizing multiplex primers and PCR buffer mastermix in the PCR chamber after or during production of the device. The liquid comprised in the lysate itself is then used to reconstitute the lyophilized mastermix.

Prior to the PCR, a long initial denaturation step, preferably in the range from 1 to 20 min, more preferably in the range of from 5 to 10 min at 95°C is performed to destroy potentially PCR-inhibiting substances and activate the DNA polymerase.

Preferably, the DNA polymerase is a thermostable hot start DNA polymerase.

PCR is performed in a chamber comprised of rigid walls and at least one flexible wall. The flexible wall can be pressed against the other wall before filling of the chamber. Thus, air is then absent in the PCR chamber and filling can be performed essentially free of air bubbles. Applying an external force to the flexible plastic foil enables also emptying of the PCR chamber, for example into the hybridisation unit. In case the flexible foils are not bend against the other walls air needs to be removed, for example through a deaeration membrane, for example described in EP 1 093 854 A1, enclosed herein by reference.

A preferred embodiment is an asymmetric PCR protocol, i.e. a PCR protocol wherein the forward and reverse primers are not added in equimolar amounts.

The amplified material is then pumped over a low density flow-over array where the labeled amplicons (i.e. amplified DNA molecules) bind to the immobilized probes, provided that the sample contained target DNA. This may either be accomplished with an active pumping unit, which may be within the integrated device or may be coupled to the device from the exterior. Alternatively, the amplified material may be pumped over the low density flow-over with a passive pumping mechanism, wherein capillary forces, e.g. of the filter described herein, are used to passively draw the liquid contained in the device, and thus the sample through the chamber comprising the low density flow-over array.

Optionally additional buffer components (e.g. salts) are mixed to the PCR mixture prior to hybridization. Such buffer components can optionally be present in dry form in the channels between PCR chamber and hybridization array.

Instead of actively pumping fluids from one chamber to another, fluid transfer may be caused by capillary forces in one or more steps of the process described herein for the operation of the device according to the present invention. Accordingly, the device will then have to comprise appropriately dimensioned channels and chambers in order to allow for fluid transfer by capillary forces, as will be known to the skilled person.

In one embodiment, the fluid comprising the amplificate is passed multiple times over the low density flow over detection array in order to enhance the device's sensitivity; in this case an active pump is needed at least in this step.

Fluid actuation may be performed by both active and passive pumping mechanisms and fluid transfer may be controlled by suitable valves. Methods for pumping (both active and passive) and control of fluid transfer in fluidic systems such as the device according to the present invention are well known to the skilled person.

Synthesis of the probes may be performed such that no 3'-OH will be present for a probe extension, i.e. di-deoxy terminated probes are used. Alternatively, the probes may be covalently coupled with their 3' end to the surface of the array to prevent a probe extension reaction.

Detection is performed by either a (laser) scanning confocal fluorescence optical system or by an evanescent wave illumination and a image detection system. The image detection system used in the device according to the present invention comprises in one embodiment a CCD chip.

As used herein, "CCD" stands for charge-coupled device, which is an analog shift register that enables the transportation of analog signals through successive stages (capacitors) controlled by a clock signal. Charge-coupled devices can be used as a form of memory or for delaying samples of analog signals. Today, they are most widely used in arrays of photoelectric light sensors, to serialize parallel analog signals. The image signal is read out from the chip under the control of an external circuit, wherein each capacitor can transfer its electric charge to one or other of its neighbors.

Preferably, the PCR chamber is built as a pumping chamber and is used to remove air from the PCR chamber, and/or pull the sample into the PCR chamber, and/or push the sample out of the PCR chamber into the low density flow over detection array.

The device comprises a filter having 10 times the size of the liquid measured at the end of the detection chamber. This filter is used to drive the liquid into the filter by a capillary driven flow, thus preventing (potentially hazardous) liquid from leaking out of the system after the measurement is finished, and thereby acting as a biosafety feature. Air from the chamber comprising the hybridization array is vented through the filter, whereby liquids which are eventually ejected from the chamber comprising the hybridization array are retained in the filter. The Filter thus comprises a material having the capacity of absorbing aqueous liquids, such as materials comprising cellulose fibers, water absorbing polymers, gels or salts, synthetic sponges, etc.

The overall system is built of polymers or hybrid systems such as plastic and glass. For the different parts different material properties are required. For the amplification part, a flexible foil is required, whereas for the detection system transparency of the system is critical.

The current invention can for instance be used as an integrated system for molecular diagnostics and/or screening with respect to pathogens, such as pathogens related to sexually transmitted diseases, MRSA, VRE, Group B *Streptococcus,* or *Clostridium difficile.*

As used herein, a low-density flow-over hybridization array is an array on a surface comprising multiple spots each containing a specific capture probe for nucleic acid hybridization. A hybridization mixture containing target nucleic acids is flowed over (rather than through) the array at least once. The lay-out of the spots can be in matrix or hexagonal pattern. The number of spots can be between 10 and 1000, preferably between 25 and 400. Besides spots for hybridization, the array can contain spots for calibration and navigation or gridding purposes. The surface on which the array is deposited can be flat or structured, e.g. to maximize surface area

Read out of hybridized amplicons that for instance carry a fluorescent label can be performed by a scanning confocal fluorescence optical system, resembling optical pick up units of a DVD player, such as described in WO 2006/038149 A1, incorporated herein by reference. Alternatively detection of fluorescence can be performed by evanescent wave illumination and detection of emitted fluorescence by e.g. a CCD detection system as described in WO2006/136991 A1 and WO 2007/010428 A3, incorporated herein by reference.

As used herein, the term "active pumping unit" specifies either a part of the device according to the present invention, herein also termed "pumping chamber", or an external pump which is connectable to the device according to the present invention and thus forms a part of the device according to the present invention in terms of a functional unit. The active pumping unit serves to actively propel the transfer of fluids through the device and from one compartment of the device to another. Pumping may be accomplished by known pumping methods, such as for instance peristaltic pumping, or with an elastic compartment which is actuated from the exterior of the compartment and which functions similar to a bellows. It is self-evident to the skilled person that the device according to the present invention may comprise one or more valves which inhibit the flow of liquids in undesirable directions (i.e. back from the PCR chamber into the lysis chamber).

As used herein, "the nucleic acid extraction unit" is a part of the integrated device according to the present invention wherein nucleic acids are extracted from the crude lysate and thus at least partially purified for further processing in the integrated device according to the present invention. Nucleic acid extraction may in principle be accomplished by any method known in the art, preferably by a system comprising a membrane selectively binding nucleic acids and further comprising appropriate buffers to release the bound nucleic acids. The membrane preferably consists of silica material. Buffers used for binding, washing and elution of DNA are well known in the art. Binding buffers usually contain guadinium salts, washing solutions usually contain water and an alcohol and elution is usually performed with water or low ionic strength buffers.

As used herein, "immobilized probes" are molecules which are immobilized on a solid carrier material (i.e. a plastic or glass surface) and which have the capacity of specifically and selectively bonding to the amplified DNA molecules. Suitable immobilized probes may for instance be modified (e.g. with a fluorescent label) or unmodified peptides, proteins (e.g. antibodies) or oligo- or polynucleic acid molecules, including DNAs, RNAs and PNAs.

As used herein the "sample lysis unit" is the part of the device wherein the lysis of cells comprised by a sample applied to the device according to the present invention takes place.

A "sample" in the meaning of the invention is a sample comprised in a medical swab which has been collected from a patient suffering from an infection or being suspected of suffering from an infection. The sample may be collected from various sources of the patient's body, such as the oral or nasal cavity, eyes, skin, rectum, vagina, as well as acoustic or respiratory tract.

As used herein in the context of the PCR chamber "repeatedly movable over areas with different temperatures" means that the device according to the present invention is constructed such that it allows for the PCR chamber to be repeatedly moved over said areas with different temperatures. Thus, the different temperatures needed for thermocycling are not applied to the PCR chamber by a single heating/cooling unit which repeatedly changes its temperature, but by distinct heating/cooling units, each having a distinct, temperature which may be selected by the user of the device according to the present invention. This principle is for instance demonstrated in the Robocycler^{®} devices by Stratagene.

As used herein, "thermocycling" specifies the meaning understood for said term in the field of PCR technology. Thus, thermocycling is a repeated sequence of different temperatures, comprising the annealing temperature of the primers to the DNA template, the melting temperature of the double-stranded DNA construct and the reaction temperature at which the replication of the DNA by the DNA polymerase takes place.

As used herein, a "sexually transmitted disease" is an illness that has a significant probability of transmission between humans or animals by means of sexual contact, but which may also be transmitted through contact with infected blood, in particular by needle exchange or transfer of blood from an infected donor, as well as through childbirth or breastfeeding.

As used herein "MRSA" encompasses multiple-resistant *Staphylococcus aureus*, as well as in particular methicillin-resistant *Staphylococcus aureus* or oxacillin-resistant *Staphylococcus aureus*, and also other strains of bacteria that are resistant to a large group of antibiotics, in particular resistant to beta-lactam antibiotics, such as the penicillins and the cephalosporins. "VRE" specifies Vancomycin-resistant *enterococcus*, which is a group of bacterial species of the genus *Enterococcus* that is resistant to the antibiotic vancomycin. It is however evident to the skilled person that other strains of bacteria which are resistant to a large range of antibiotics may also be targets of interest in the methods disclosed herein.

As used herein "group B *streptococcus*" specifies Beta-hemolytic Group B streptococcus, such as Streptococcus agalactiae, which causes pneumonia and meningitis in neonates and the elderly, with occasional systemic bacteremia. They can also colonize the intestines and the female reproductive tract, increasing the risk for premature rupture of membranes and transmission to the infant where it can cause neonatal sepsis

"Patients" or "subjects" in the meaning of the invention are understood to be all persons or animals irrespective whether or not they exhibit pathological changes, unless stated otherwise. In a preferred embodiment the patient according to the invention is a human. In a further preferred embodiment of the invention the patient is a human suspected to have a disease selected with one of the diseases mentioned herein or with one of the bacterial strains mentioned herein.

As used herein, "target DNA" specifies a DNA of interest which is to be detected and/or quantified in a sample by use of the devices and by the methods of the present invention. This may for instance be the DNA of one of the pathogens described herein or of a pathogen playing a role in the diseases mentioned herein.

## Claims

1. An integrated device for automated simultaneous detection of multiple specific targets using nucleic acid amplification comprising:
- A sample receptacle unit
- A sample lysis unit
- At least one closed PCR reaction chamber repeatedly movable over areas with at least three different temperatures to perform thermocycling or a closed circuit of at least three PCR reaction chambers, wherein each chamber has a different temperature and wherein the fluid comprising the sample is sequentially and repeatedly pumped through said PCR reaction chambers
- A low-density flow-over hybridization array
- A pumping unit for pumping the PCR products over the low-density flow-over hybridization array
- A detecting unit which is either a scanning confocal fluorescence optical system or an evanescent wave illumination with image detection system.

2. An integrated device according to claim 1, wherein the integrated device further comprises a nucleic acid extraction unit.

3. An integrated device according to claim 1 or 2, wherein the low-density flow-over hybridization array comprises immobilized probes.

4. An integrated device according to claims 1 to 3, wherein the device further comprises a filter having at least 10 times the size of the liquid measured at the end of the detection unit.

5. An integrated device according to claims 1 to 4, wherein the at least one PCR chamber is built as a pumping chamber.

6. A method for automated simultaneous detection of multiple specific targets using nucleic acid amplification comprising:
- Providing the sample to the sample receptacle unit
- Generating a crude lysate fluid
- Optionally extracting nucleic acids from the crude lysate fluid
- Dilution of the crude lysate fluid or the extracted nucleic acids
- Active flow pumping of the crude lysate fluid or the diluted nucleic acids into at least one closed PCR reaction chamber repeatedly movable over areas with at least three different temperatures or a circuit of at least three closed PCR reaction chambers, wherein each chamber has a different temperature and wherein the fluid comprising the sample is sequentially and repeatedly pumped through said PCR reaction chambers
- Initial denaturation step at 95°C
- PCR cycling in said PCR reaction chamber(s) to perform thermocycling
- Pushing or pulling the sample out of the PCR chamber into the said low-density flow-over hybridization array
- Detection either by a scanning fluorescence optical system or an evanescent wave illumination and image detection system.

7. A method according to claim 6, wherein the fluid is passed at least twice over the low-density flow-over hybridization array.

8. Use of a device according to claims 1 to 5 for diagnosis.

9. Use of a device according to claim 8, wherein a sexually transmitted disease is diagnosed.

10. Use of a device according to claims 1 to 5 for MRSA screening.

11. Use of a device according to claims 1 to 5 for VRE screening.

12. Use of a device according to claims 1 to 5 for a detection of toxinogenic *Clostridium difficile.*

13. Use of a device according to claims 1 to 5 for detecting group B *streptococcus.*

14. Use of a device according to claims 1 to 5 for the detection of nosocomial infections.
